# EUROPEAN PATENT APPLICATION

(11) **EP 4 066 920 A1**
(43) Date of publication of application: **05.10.2022**
(21) Application number: 21846365.1
(22) Date of filing: 24.05.2021
(51) Int. Cl.: B01D 53/18, B01D 53/50, B01D 53/78, B01D 53/92, F01N 3/04, F01N 3/24

(54) **EXHAUST GAS TREATMENT DEVICE**

(30) Priority: 21.07.2020 JP 2020124491
(71) Applicant: Fuji Electric Co., Ltd., Kawasaki-shi, Kanagawa 210-9530 (JP)
(72) Inventor: ENAMI, Yoshiaki, Kawasaki-shi, Kanagawa 210-9530 (JP)
(74) Representative: MERH-IP Matias Erny Reichl Hoffmann Patentanwälte PartG mbB
(86) International application number: PCT/JP2021/019630
(87) International publication number: WO 2022/018957

(57) **Abstract**

Provided is an exhaust gas treatment apparatus including: a reaction tower having an exhaust gas inlet port into which exhaust gas is introduced and an exhaust gas outlet port from which the exhaust gas is discharged and that is supplied with a liquid for treating the exhaust gas; and one or a plurality of swirl units that are provided inside the reaction tower and provided between the exhaust gas inlet port and the exhaust gas outlet port and configured to cause the exhaust gas to be swirled, in which the swirl unit has an outer cylinder, and a spiral plate that is provided in a cavity portion inside the outer cylinder, the spiral plate being obtained by twisting a flat plate, and a length of one side of the flat plate is equal to a width of the cavity portion in a direction intersecting an extension direction of the outer cylinder.

## Description

### BACKGROUND

### 1. TECHNICAL FIELD

The present invention relates to an exhaust gas treatment apparatus.

### 2. RELATED ART

Patent Document 1 discloses that "with a cyclone type dust collector 10 of the present embodiment, a mixing ratio of a particle of an application mist, and a particle of a water mist is increased, a particle to be removed and the particle of the water mist easily coalesce, and dust collection efficiency of the particle to be removed is improved more than the related art" (Paragraph 0031). Patent Document 2 discloses that "a hub is formed in a rod shape, a swirler includes a first swirl vane and a second swirl vane, the second swirl vane is constituted so as to impart a larger centrifugal force to a vapor-liquid mixture flow than the centrifugal force imparted to the vapor-liquid mixture flow by the first swirl vane, and thus, it is possible to reduce a pressure loss of a vapor-liquid separator and it is possible to exhibit high steam separation performance" (Paragraph 0029).

### Citation List

### Patent Document

Patent Document 1: Japanese Patent Application Publication No. 2018-140328
Patent Document 2: Japanese Patent Application Publication No. 2010-43969

### Technical Problem

In an exhaust gas treatment apparatus, it is preferable to suppress a discharge of a liquid, which accompanies an exhaust gas, to an outside of the exhaust gas treatment apparatus.

### General Disclosure

A first aspect of the present invention provides an exhaust gas treatment apparatus. The exhaust gas treatment apparatus includes a reaction tower that has an exhaust gas inlet port into which exhaust gas is introduced and an exhaust gas outlet port from which the exhaust gas is discharged and that is supplied with a liquid for treating the exhaust gas; and one or a plurality of swirl units that are provided inside the reaction tower and are provided between the exhaust gas inlet port and the exhaust gas outlet port and that are configured to cause the exhaust gas to be swirled. The swirl unit has an outer cylinder, and a spiral plate that is provided in a cavity portion inside the outer cylinder, the spiral plate being obtained by twisting a flat plate. A length of one side of the flat plate is equal to a width of the cavity portion in a direction intersecting an extension direction of the outer cylinder.

The reaction tower may further have a liquid spray unit provided between the exhaust gas inlet port and the exhaust gas outlet port. In the liquid spray unit, the liquid may be sprayed into the inside of the reaction tower. The exhaust gas may swirl in the liquid spray unit in a predetermined swirling direction, and travel inside the reaction tower in a direction from the exhaust gas inlet port to the exhaust gas outlet port. The swirling direction of the exhaust gas that swirls in the liquid spray unit, and a swirling direction of the exhaust gas that swirls in the swirl unit may be the same.

The reaction tower may further have a liquid spray unit provided between the exhaust gas inlet port and the exhaust gas outlet port. In the liquid spray unit, the liquid may be sprayed into the inside of the reaction tower. The exhaust gas may swirl in the liquid spray unit in a predetermined swirling direction, and travel inside the reaction tower in a direction from the exhaust gas inlet port to the exhaust gas outlet port. The swirling direction of the exhaust gas that swirls in the liquid spray unit, and a swirling direction of the exhaust gas that swirls in the swirl unit may be different from each other.

The plurality of swirl units may be arranged side by side in a direction intersecting the direction from the exhaust gas inlet port to the exhaust gas outlet port. The outer cylinder may include a slit extending in a predetermined direction. The slit in the outer cylinder of one swirl unit, and the outer cylinder of another swirl unit may face each other.

The slit may extend in a central axis direction of the outer cylinder.

The slit may extend spirally in a direction opposite to the swirling direction of the exhaust gas that swirls in the swirl unit.

A swirling direction of the exhaust gas that swirls in the one swirl unit, and a swirling direction of the exhaust gas that swirls in the other swirl unit may be the same.

A swirling direction of the exhaust gas that swirls in the one swirl unit, and a swirling direction of the exhaust gas that swirls in the other swirl unit may be different from each other.

The one swirl unit may be arranged to be closer to an inner side surface of the reaction tower than the other swirl unit is. A width in the outer cylinder of the one swirl unit may be larger than a width of the outer cylinder of the other swirl unit.

The one swirl unit may be arranged to be closer to an inner side surface of the reaction tower than the other swirl unit is. A width in the outer cylinder of the one swirl unit may be smaller than a width of the outer cylinder of the other swirl unit.

The reaction tower may further have a connection member that is provided inside the reaction tower and that is configured to connect the inner side surface of the reaction tower and the outer cylinder of the swirl unit.

The summary clause does not necessarily describe all necessary features of the embodiments of the present invention. The present invention may also be a sub-combination of the features described above.

### BRIEF DESCRIPTION OF THE DRAWINGS

Fig. 1 is a diagram showing an example of an exhaust gas treatment apparatus 100 according to an embodiment of the present invention.
Fig. 2 is an enlarged diagram showing an example of a liquid spray unit 90 in Fig. 1.
Fig. 3 is a diagram showing an example of a case where the exhaust gas treatment apparatus 100 shown in Fig. 1 and Fig. 2 is viewed from a traveling direction E1.
Fig. 4 is a perspective view showing an example of a liquid removal unit 80 in Fig. 1.
Fig. 5 is a diagram showing an example of a case where the liquid removal unit 80 shown in Fig. 4 is viewed from a traveling direction E2.
Fig. 6 is a perspective view showing an example of one swirl unit 82 shown in Fig. 1, Fig. 4, and Fig. 5.
Fig. 7 is a diagram showing an example of a case where the one swirl unit 82 shown in Fig. 6 is viewed in a direction from an outlet end 104 to an inlet end 102.
Fig. 8 is a diagram showing an example of a flat plate 88.
Fig. 9 is a diagram showing an example of the case where the liquid removal unit 80 shown in Fig. 4 is viewed from the traveling direction E2.
Fig. 10 is a diagram showing another example of the case where the liquid removal unit 80 shown in Fig. 4 is viewed from the traveling direction E2.
Fig. 11 is a diagram showing another example of the case where the liquid removal unit 80 shown in Fig. 4 is viewed from the traveling direction E2.
Fig. 12 is an enlarged view showing an example of two swirl units 82 that are arranged to be adjacent to each other in Fig. 5.
Fig. 13 is an enlarged view showing another example of the two swirl units 82 that are arranged to be adjacent to each other in Fig. 5.
Fig. 14 is an enlarged view showing another example of the two swirl units 82 that are arranged to be adjacent to each other in Fig. 5.
Fig. 15 is an enlarged view of a vicinity of a slit 89 in Fig. 14.
Fig. 16 is a perspective view showing another example of the one swirl unit 82 shown in Fig. 1, Fig. 4, and Fig. 5.
Fig. 17 is a diagram showing another example of the case where the liquid removal unit 80 shown in Fig. 4 is viewed from the traveling direction E2.
Fig. 18 is a diagram showing another example of the case where the liquid removal unit 80 shown in Fig. 4 is viewed from the traveling direction E2.

### DESCRIPTION OF EXEMPLARY EMBODIMENTS

Hereinafter, the present invention will be described through embodiments of the invention, but the following embodiments do not limit the invention according to the claims. In addition, not all of the combinations of features described in the embodiments are essential for means to solve the problem in the invention.

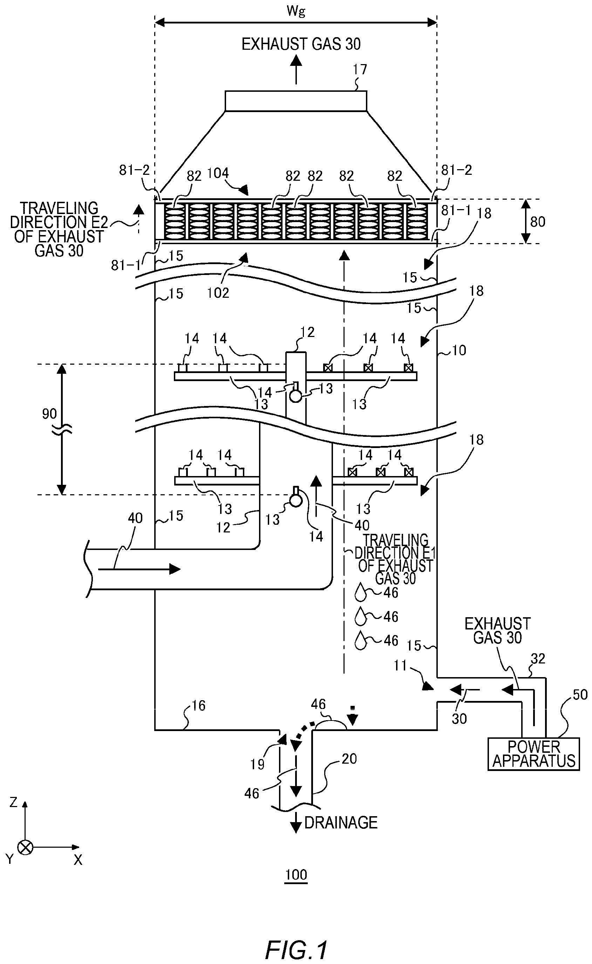

Fig. 1 is a diagram showing an example of an exhaust gas treatment apparatus 100 according to an embodiment of the present invention. The exhaust gas treatment apparatus 100 includes a reaction tower 10 and one or a plurality of swirl units 82. The swirl unit 82 is provided inside the reaction tower 10. The exhaust gas treatment apparatus 100 may include an exhaust gas inlet tube 32, a power apparatus 50, and a drainage tube 20.

The power apparatus 50 is, for example, an engine, a boiler, or the like. The power apparatus 50 discharges exhaust gas 30. The exhaust gas inlet tube 32 connects the power apparatus 50 and the reaction tower 10. The exhaust gas 30 is introduced into the reaction tower 10. In the present example, the exhaust gas 30 discharged from the power apparatus 50 passes through the exhaust gas inlet tube 32, and then is introduced into the reaction tower 10.

The reaction tower 10 has an exhaust gas inlet port 11 into which the exhaust gas 30 is introduced and an exhaust gas outlet port 17 from which the exhaust gas 30 is discharged. The reaction tower 10 is supplied with a liquid 40 for treating the exhaust gas 30. The liquid 40 supplied to the reaction tower 10 treats the exhaust gas 30 inside the reaction tower 10. The liquid 40 is, for example, sea water or an alkaline liquid. Treating the exhaust gas 30 refers to removing harmful substances which are contained in the exhaust gas 30. The liquid 40 becomes drainage 46 after treating the exhaust gas 30.

The reaction tower 10 of the present example has a side wall 15, a bottom surface 16, a gas treatment unit 18, and a liquid discharge port 19. The reaction tower 10 of the present example is cylindrical. In the present example, the exhaust gas outlet port 17 is arranged at a location opposite to the bottom surface 16 in a direction parallel to a central axis of the cylindrical reaction tower 10. In the present example, the side wall 15 and the bottom surface 16 are respectively an inner side surface and a bottom surface of the cylindrical reaction tower 10. The exhaust gas inlet port 11 may be provided on the side wall 15. In the present example, the exhaust gas 30 passes through the exhaust gas inlet port 11 from the exhaust gas inlet tube 32, and then is introduced into the gas treatment unit 18.

The gas treatment unit 18 is a space surrounded by the side wall 15, the bottom surface 16, and the exhaust gas outlet port 17. The gas treatment unit 18 is in contact with the side wall 15, the bottom surface 16, and the exhaust gas outlet port 17. The gas treatment unit 18 is a space for treating the exhaust gas 30 inside the reaction tower 10. The bottom surface 16 is a surface to which the drainage 46 drops. The drainage 46 passes through the liquid discharge port 19, and then is discharged through the drainage tube 20.

The side wall 15 and the bottom surface 16 are formed of a material that is durable against the exhaust gas 30, the liquid 40, and the drainage 46. The material may be a combination of an iron material such as SS400 and S-TEN (registered trademark) and at least one of a coating agent or an application agent, a copper alloy such as naval brass, an aluminum alloy such as aluminum brass, a nickel alloy such as cupronickel, Hastelloy (registered trademark), or stainless steel such as SUS316L, SUS329J4L, or SUS312.

In the present specification, technical matters may be described by using orthogonal coordinate axes of an X axis, a Y axis, and a Z axis. In the present specification, a plane parallel to the bottom surface 16 of the reaction tower 10 is set as an XY plane. In the present specification, a direction connecting the bottom surface 16 and the exhaust gas outlet port 17 (a direction perpendicular to the bottom surface 16) is set as a Z axis direction. In the present specification, a predetermined direction in the XY plane is set as an X axis direction, and a direction orthogonal to the X axis in the XY plane is set as a Y axis direction.

In the present specification, the X axis direction refers to a direction from one to the other, and a direction from the other to the one, in a direction parallel to the X axis. That is, in the present specification, the X axis direction does not refer to any one of the two directions parallel to the X axis, but refers to the direction parallel to the X axis. In the present specification, the same applies to the Y axis direction and the Z axis direction.

The Z axis direction may be parallel to a direction of gravity. When the Z axis direction is parallel to the direction of gravity, the XY plane may be a horizontal plane. The Z axis direction may be parallel to a horizontal direction. When the Z axis direction is parallel to the horizontal direction, the XY plane may be parallel to the direction of gravity.

In the present specification, a side view refers to a case where the exhaust gas treatment apparatus 100 is viewed from a direction perpendicular to the Z axis (a predetermined direction in the XY plane). In the present specification, a side view diagram refers to a diagram of the side view.

A width Wg is a width from one side wall 15 to the other side wall 15 in the X axis direction in the side view of the reaction tower 10. In the present example, the width Wg is a diameter of the gas treatment unit 18 when viewed in a direction from the exhaust gas outlet port 17 to the exhaust gas inlet port 11. The width Wg may be a width from one side wall 15 to the other side wall 15 at a location in which a liquid removal unit 80 (described below) is provided and which is between the bottom surface 16 and the exhaust gas outlet port 17 in the Z axis direction.

The exhaust gas treatment apparatus 100 is, for example, a cyclone type scrubber for a ship. In the cyclone type scrubber, the exhaust gas 30 introduced into the reaction tower 10 swirls inside the reaction tower 10, and travels in a direction from the exhaust gas inlet port 11 to the exhaust gas outlet port 17 (in the present example, the Z axis direction). In the present example, the exhaust gas 30 swirls in the XY plane when viewed in a direction from the exhaust gas outlet port 17 to the bottom surface 16.

The reaction tower 10 may further have a liquid spray unit 90. The liquid spray unit 90 may be provided between the exhaust gas inlet port 11 and the exhaust gas outlet port 17. A traveling direction of the exhaust gas 30 from the exhaust gas inlet port 11 to the exhaust gas outlet port 17 inside the reaction tower 10 is set as a traveling direction E1. In the present example, the traveling direction E1 is the Z axis direction.

A region of the liquid spray unit 90 may be a part of a region between the exhaust gas inlet port 11 and the exhaust gas outlet port 17 in the traveling direction E1. The region of the liquid spray unit 90 may be an entire region on the inside (the gas treatment unit 18) of the reaction tower 10 when the reaction tower 10 is viewed in the direction from the exhaust gas outlet port 17 to the bottom surface 16 (the XY plane). In the liquid spray unit 90, the liquid 40 may be sprayed into the inside of the reaction tower 10.

The reaction tower 10 may have one or a plurality of trunk tubes 12 through which the liquid 40 is supplied, and one or a plurality of branch tubes 13. The reaction tower 10 may have one or a plurality of ejection units 14 that eject the liquid 40. In the present example, the ejection unit 14 is connected to the branch tube 13, and the branch tube 13 is connected to the trunk tube 12.

In the present example, at least a part of the trunk tube 12, the branch tube 13, and the ejection unit 14 are provided in the liquid spray unit 90. In Fig. 1, a range of the liquid spray unit 90 inside the reaction tower 10 is indicated by a double-headed arrow. The range of the liquid spray unit 90 may be a range, in a direction parallel to the Z axis, from the ejection unit 14 arranged to be closest to an exhaust gas inlet port 11 side, to the ejection unit 14 arranged to be closest to an exhaust gas outlet port 17 side. The range of the liquid spray unit 90 may be a range surrounded by the side wall 15 in the XY plane.

In the present example, the exhaust gas 30 swirls in the liquid spray unit 90 in a predetermined direction (a swirling direction F1 which will be described below), and travels inside the reaction tower 10 in the direction from the exhaust gas inlet port 11 to the exhaust gas outlet port 17. In the present example, the exhaust gas 30 travels in the traveling direction E1 in the side view of the reaction tower 10, and swirls in the swirling direction F1 when viewed from the traveling direction E1.

In the present example, the reaction tower 10 further has the liquid removal unit 80. The liquid removal unit 80 is provided with one or a plurality of swirl units 82. One swirl unit 82 may be a so-called swirler. The swirl unit 82 is provided between the exhaust gas inlet port 11 and the exhaust gas outlet port 17. In the present example, the plurality of swirl units 82 are arranged side by side in a direction (in the present example, in the XY plane) intersecting the traveling direction E1.

A region of the liquid removal unit 80 may be a part of a region between the liquid spray unit 90 and the exhaust gas outlet port 17 in the traveling direction E1. A traveling direction of the exhaust gas 30 in the liquid removal unit 80 is set as a traveling direction E2. In the present example, the traveling direction E2 is the Z axis direction.

The reaction tower 10 may further have a connection member 81 provided inside the reaction tower 10. The swirl unit 82 may be connected to the side wall 15 by the connection member 81. The connection member 81 may be welded to the side wall 15. The liquid removal unit 80 of the present example is provided with two connection members 81 (a connection member 81-1 and a connection member 81-2). In the present example, the connection member 81-1 and the connection member 81-2 are the connection members 81 that are provided on an inlet end 102 (described below) side and an outlet end 104 (described below) side in the traveling direction E2, respectively. The plurality of swirl units 82 may be connected to each other by the connection member 81.

In the present example, the one swirl unit 82 has an inlet end 102 into which the exhaust gas 30 is introduced and an outlet end 104 from which the exhaust gas 30 is led out. The exhaust gas 30 travels inside the swirl unit 82 in the traveling direction E2 (a direction from the inlet end 102 to the outlet end 104). In the present example, the exhaust gas 30 travels in the traveling direction E2 in the side view of the swirl unit 82.

The swirl unit 82 swirls the exhaust gas 30. In the present example, the swirl unit 82 swirls the exhaust gas 30 in a predetermined swirling direction (a swirling direction F2 or a swirling direction F2' which is described below) when viewed from the traveling direction E2.

The region of the liquid removal unit 80 may be the entire region on the inside of the reaction tower 10 when the reaction tower 10 is viewed in the direction from the exhaust gas outlet port 17 to the bottom surface 16 (the XY plane). In the liquid removal unit 80, at least a part of the liquid 40 contained in the exhaust gas 30 is removed.

The smaller a particle size of the liquid 40 is, the more easily a contact area between the liquid 40 and the exhaust gas 30 is increased. Therefore, in order to remove harmful substances such as sulfur oxides (SOₓ) contained in the exhaust gas 30, it is desirable for the liquid 40, which is ejected from the ejection unit 14, to be in a form of a mist (an atomized form). When the liquid 40 is in the form of a mist, a part of the liquid 40 ejected to the exhaust gas 30 easily travels in the direction to the exhaust gas outlet port 17, accompanying the swirl and the travel of the exhaust gas 30 to the exhaust gas outlet port 17 in the gas treatment unit 18. When a part of the liquid 40 travels in the direction to the exhaust gas outlet port 17, the liquid 40 may be discharged to an outside of the exhaust gas treatment apparatus 100, accompanying the exhaust gas 30. The liquid 40 may contain bisulfite ion (HSO₃⁻) due to contact with the exhaust gas 30. Therefore, when the liquid 40 containing the bisulfite ion (HSO₃⁻) is discharged to the outside of the exhaust gas treatment apparatus 100, the liquid 40 may corrode a steel material or the like outside the exhaust gas treatment apparatus 100.

In the exhaust gas treatment apparatus 100 of the present example, the reaction tower 10 has the liquid removal unit 80 on a downstream side of the exhaust gas 30 from the liquid spray unit 90 in the traveling direction F1. Therefore, in the exhaust gas treatment apparatus 100 of the present example, it is difficult for the liquid 40, which is ejected to the exhaust gas 30 and is in the form of a mist, to be discharged to the outside of the exhaust gas treatment apparatus 100.

The traveling direction E1 of the exhaust gas 30 in the reaction tower 10, and the traveling direction E2 of the exhaust gas 30 in the swirl unit 82 may be parallel, or may not be parallel. In the present example, the traveling direction E1, and the traveling direction E2 are parallel to each other.

The cylindrical reaction tower 10 may be mounted such that the central axis of the reaction tower 10 is parallel to a vertical direction, or may be mounted such that the central axis is parallel to the horizontal direction. When the reaction tower 10 is mounted such that the central axis is parallel to the vertical direction, the traveling direction E1 is a direction from a bottom to a top in the vertical direction. When the reaction tower 10 is mounted such that the central axis is parallel to the horizontal direction, the traveling direction E1 is parallel to the horizontal direction.

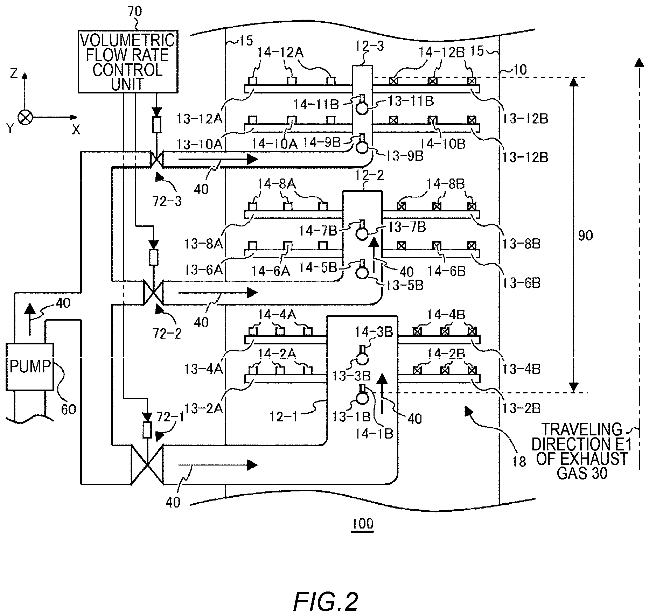

Fig. 2 is an enlarged diagram showing an example of a liquid spray unit 90 in Fig. 1. The reaction tower 10 of the present example has three trunk tubes 12 (a trunk tube 12-1, a trunk tube 12-2, and a trunk tube 12-3). In the present example, the trunk tube 12-1 and the trunk tube 12-3 are the trunk tubes 12 that are respectively provided to be closest to the exhaust gas inlet port 11 side and the exhaust gas outlet port 17 side in the Z axis direction. In the present example, the trunk tube 12-2 is the trunk tube 12 that is provided between the trunk tube 12-1 and the trunk tube 12-3 in the Z axis direction.

The reaction tower 10 of the present example includes a branch tube 13-1 to a branch tube 13-12. In the present example, the branch tube 13-1 and the branch tube 13-12 are the branch tubes 13 that are respectively provided to be closest to the exhaust gas inlet port 11 side and the exhaust gas outlet port 17 side in the Z axis direction. In the present example, the branch tube 13-1, the branch tube 13-3, the branch tube 13-5, the branch tube 13-7, the branch tube 13-9, and the branch tube 13-11 extend in the Y axis direction, and the branch tube 13 -2, the branch tube 13-4, the branch tube 13-6, the branch tube 13-8, the branch tube 13-10, and the branch tube 13-12 extend in the X axis direction.

In the present example, the branch tube 13-1 to the branch tube 13-4 are connected to the trunk tube 12-1, the branch tube 13-5 to the branch tube 13-8 are connected to the trunk tube 12-2, and the branch tube 13- 9 to the branch tube 13-12 are connected to the trunk tube 12-3. The branch tube 13-1, the branch tube 13-3, the branch tube 13-5, the branch tube 13-7, the branch tube 13-9, and the branch tube 13-11 may be arranged on both sides of the trunk tube 12 in the Y axis direction. The branch tube 13-2, the branch tube 13-4, the branch tube 13-6, the branch tube 13-8, the branch tube 13-10, and the branch tube 13-12 may be arranged on both sides of the trunk tube 12 in the X axis direction.

When a description is made by taking the branch tube 13-1 as an example, a branch tube 13-1A and a branch tube 13-1B are the branch tubes 13-1 that are respectively arranged on one side and the other side of the trunk tube 12-1 in the Y axis direction. In the Y axis direction, the branch tube 13-1A and the branch tube 13-1B may be provided such that the trunk tube 12-1 is interposed therebetween. It should be noted that in Fig. 2, the branch tube 13-1A and the branch tube 13-3A are arranged at locations overlapping the trunk tube 12-1, and thus are not shown.

When a description is made by taking the branch tube 13-2 as an example, a branch tube 13-2A and a branch tube 13-2B are the branch tubes 13-2 that are respectively arranged on one side and the other side of the trunk tube 12-1 in the X axis direction. In the X axis direction, the branch tube 13-2A and the branch tube 13-2B may be provided such that the trunk tube 12-1 is interposed therebetween.

The reaction tower 10 of the present example includes an ejection unit 14-1 to an ejection unit 14-12. In the present example, the ejection unit 14-1 and the ejection unit 14-12 are the ejection units 14 that are respectively provided to be closest to the exhaust gas inlet port 11 side and the exhaust gas outlet port 17 side in the Z axis direction. The ejection unit 14-1 to ejection unit 14-12 of the present example are respectively connected to the branch tube 13-1 to branch tube 13-12. In one branch tube 13 extending in the Y axis direction, a plurality of ejection units 14 may be provided on one side of the trunk tube 12 in the Y axis direction, and the plurality of ejection units 14 may be provided on the other side. In one branch tube 13 extending in the X axis direction, the plurality of ejection units 14 may be provided on one side of the trunk tube 12 in the X axis direction, and the plurality of ejection units 14 may be provided on the other side. It should be noted that in Fig. 2, an ejection unit 14-1A, an ejection unit 14-3A, an ejection unit 14-5A, an ejection unit 14-7A, an ejection unit 14-9A, and an ejection unit 14-11A are arranged at locations overlapping the trunk tube 12, and thus are not shown.

The ejection unit 14 has an opening surface for ejecting the liquid 40. In Fig. 2, the opening surface is indicated by an "x" mark. The opening surface of each of the ejection units 14, which are arranged in one branch tube 13 on one side and the other side of the trunk tube 12, may point to one direction and the other direction forming predetermined angles θ (described below) with an extension direction of the branch tube 13. An angle θ may be 30 degrees or more and 90 degrees or less. The direction which is pointed to by the opening surface refers to a central axis direction in a direction in which the liquid 40 is ejected from the ejection unit 14.

The exhaust gas treatment apparatus 100 may include a pump 60 and a volumetric flow rate control unit 70. The volumetric flow rate control unit 70 controls a volumetric flow rate of the liquid 40 that is supplied to the reaction tower 10. The volumetric flow rate control unit 70 may have a valve 72. In the present example, the volumetric flow rate control unit 70 controls, by the valve 72, the volumetric flow rate of the liquid 40 that is supplied from the pump 60 to the ejection unit 14. The volumetric flow rate control unit 70 of the present example includes three valves 72 (a valve 72-1, a valve 72-2, and a valve 72-3). The volumetric flow rate control unit 70 of the present example controls the volumetric flow rate of the liquids 40 that are respectively supplied to the trunk tube 12-1, the trunk tube 12-2, and the trunk tube 12-3 by the valve 72-1, the valve 72-2, and the valve 72-3. The liquid 40 supplied to the trunk tube 12 passes through the branch tube 13, and then is ejected from the ejection unit 14 to the inside (the gas treatment unit 18) of the reaction tower 10.

The volumetric flow rate control unit 70 may control the volumetric flow rate of the liquid 40 such that the volumetric flow rate of the liquid 40 which is supplied to the trunk tube 12-1 is larger than the volumetric flow rate of the liquid 40 which is supplied to the trunk tube 12-2. The volumetric flow rate control unit 70 may control the volumetric flow rate of the liquid 40 such that the volumetric flow rate of the liquid 40 which is supplied to the trunk tube 12-2 is larger than the volumetric flow rate of the liquid 40 which is supplied to the trunk tube 12-3. A ratio of the volumetric flow rate of the liquid 40 that is supplied to the trunk tube 12-3, the volumetric flow rate of the liquid 40 that is supplied to the trunk tube 12-2, and the volumetric flow rate of the liquid 40 that is supplied to the trunk tube 12-1 is, for example, 1:2:9.

As mentioned above, the liquid 40 is, for example, the sea water or the alkaline liquid. When the liquid 40 is the alkaline liquid, the liquid 40 may be the alkaline liquid to which at least one of sodium hydroxide (NaOH) or sodium hydrogen carbonate (Na₂CO₃) is added.

The exhaust gas 30 contains harmful substances such as sulfur oxides (SOₓ). The sulfur oxide (SOₓ) is, for example, a sulfurous acid gas (SO₂). When the liquid 40 is an aqueous solution of the sodium hydroxide (NaOH), a reaction between the sulfurous acid gas (SO₂) contained in the exhaust gas 30 and the sodium hydroxide (NaOH) is represented by the following Chemical Formula 1.

[Chemical Formula 1] SO₂+Na⁺+OH⁻→Na⁺+HSO₃⁻

As shown in Chemical Formula 1, the sulfurous acid gas (SO₂) becomes the bisulfite ion (HSO₃⁻) by a chemical reaction. The liquid 40 becomes the drainage 46 containing the bisulfite ion (HSO₃⁻) by this chemical reaction. The drainage 46 may be discharged from the drainage tube 20 to the outside of the exhaust gas treatment apparatus 100.

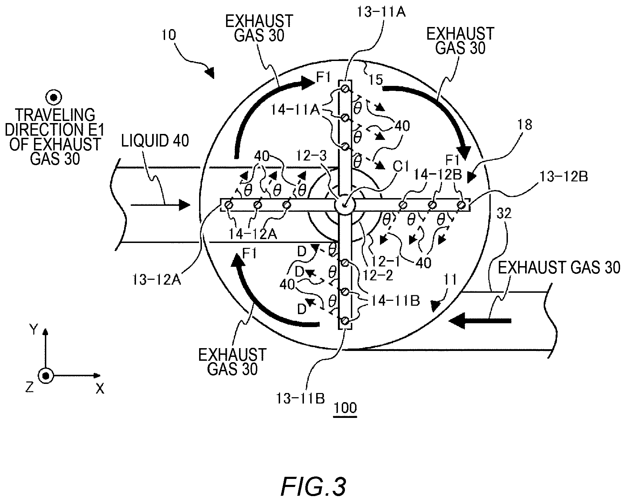

Fig. 3 is a diagram showing an example of a case where the exhaust gas treatment apparatus 100 shown in Fig. 1 and Fig. 2 is viewed from a traveling direction E1. In Fig. 3, the power apparatus 50, the pump 60, the volumetric flow rate control unit 70, the swirl unit 82, the connection member 81, and the exhaust gas outlet port 17 are omitted.

Inside the reaction tower 10, the trunk tube 12-1, the trunk tube 12-2, and the trunk tube 12-3 are provided. The trunk tube 12-1, the trunk tube 12-2, and the trunk tube 12-3 may be cylindrical and have a central axis parallel to the Z axis. In the XY plane, locations of the central axes of the trunk tube 12-1, the trunk tube 12-2, and the trunk tube 12-3 may match a location of the central axis of the reaction tower 10. That is, the trunk tube 12-1, the trunk tube 12-2, the trunk tube 12-3, and the reaction tower 10 may be concentrically arranged when viewed from the traveling direction E1 of the exhaust gas 30. In Fig. 3, the location of this central axis is indicated by a location C1. In the present example, the trunk tube 12-2 is arranged below the trunk tube 12-3, and the trunk tube 12-1 is arranged below the trunk tube 12-2.

In the XY plane, a cross sectional area of the trunk tube 12 on the exhaust gas inlet port 11 side (refer to Fig. 1) may be larger than a cross sectional area of the trunk tube 12 on the exhaust gas outlet port 17 side (refer to Fig. 1). In the present example, a cross sectional area of the trunk tube 12-1 is larger than a cross sectional area of the trunk tube 12-2, and a cross sectional area of the trunk tube 12-2 is larger than a cross sectional area of the trunk tube 12-3.

The ejection unit 14 ejects the liquid 40 into the inside of the reaction tower 10. The ejection unit 14 ejects the liquid 40 in a direction forming a predetermined angle θ with the extension direction of the branch tube 13. In Fig. 3, a direction of the liquid 40, which is ejected from the ejection unit 14-11 and the ejection unit 14-12 to the gas treatment unit 18, is indicated by a dashed arrow.

In the present example, a direction of the liquid 40, which is ejected from the ejection unit 14-11A, is one direction in the direction forming an angle θ with the extension direction of the branch tube 13-11, and a direction of the liquid 40, which is ejected from the ejection unit 14-11B, is the other direction in the direction forming an angle θ with the extension direction of the branch tube 13-11. Directions of the liquids 40, which are ejected from the ejection unit 14-1A, the ejection unit 14-3A, the ejection unit 14-5A, the ejection unit 14-7A, and the ejection unit 14-9A, may also be the one direction. Directions of the liquids 40, which are ejected from the ejection unit 14-1B, the ejection unit 14-3B, the ejection unit 14-5B, the ejection unit 14-7B, and the ejection unit 14-9B, may also be the other direction.

In the present example, a direction of the liquid 40, which is ejected from an ejection unit 14-12A, is one direction in the direction forming an angle θ with the extension direction of the branch tube 13-12, and a direction of the liquid 40, which is ejected from the ejection unit 14-12B, is the other direction in the direction forming an angle θ with the extension direction of the branch tube 13-12. Directions of the liquids 40, which are ejected from an ejection unit 14-2A, an ejection unit 14-4A, an ejection unit 14-6A, an ejection unit 14-8A, and the ejection unit 14-10A, may also be the one direction. Directions of the liquids 40, which are ejected from an ejection unit 14-2B, an ejection unit 14-4B, an ejection unit 14-6B, an ejection unit 14-8B, and an ejection unit 14-10B, may also be the other direction.

When viewed from the traveling direction E1, the exhaust gas inlet tube 32 may be provided at a location where an extension line in an extension direction of the exhaust gas inlet tube 32 does not overlap the location C1 at the center of the reaction tower 10. The extension direction of the exhaust gas inlet tube 32 refers to the traveling direction of the exhaust gas 30 passing through the exhaust gas inlet port 11. By providing the exhaust gas inlet tube 32 at the above-mentioned location, the exhaust gas 30 swirls spirally (in a cyclone form) in the gas treatment unit 18, and travels from the exhaust gas inlet port 11 toward the exhaust gas outlet port 17. In the present example, the exhaust gas 30 swirls in the gas treatment unit 18 in the swirling direction F1 when viewed from the traveling direction E1. In the present example, the swirling direction F1 is clockwise when viewed from the traveling direction E1.

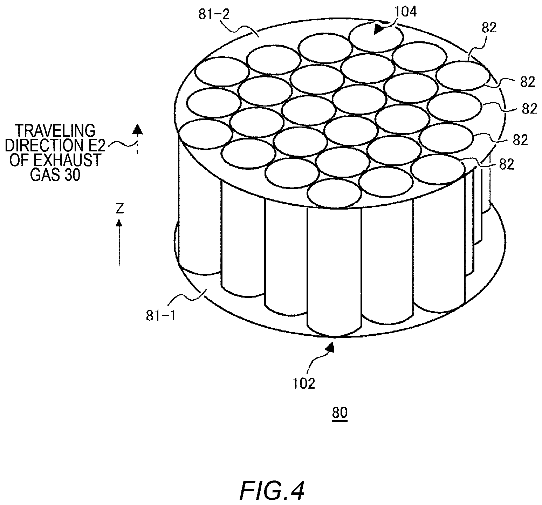

Fig. 4 is a perspective view showing an example of a liquid removal unit 80 in Fig. 1. The one swirl unit 82 may be cylindrical and have a central axis in the Z axis direction. In the present example, the one swirl unit 82 is cylindrical and has the central axis in the Z axis direction. The plurality of swirl units 82 are arranged side by side in a direction (in the present example, in the XY plane) intersecting the traveling direction E2. The plurality of swirl units 82 may be arranged to be planar in the direction intersecting the traveling direction E2, or may be arranged in a matrix form. In the present example, a plurality of cylindrical swirl units 82 are arranged in a hexagonally close-packed form in the direction intersecting the traveling direction E2.

When the cylindrical swirl units 82 are arranged side by side in the hexagonally close-packed form, the number of the plurality of swirl units 82 in a plane in which the swirl units 82 are arranged side by side is easily maximized. Therefore, in order to reduce a pressure loss in the liquid removal unit 80 by reducing the volumetric flow rate of the exhaust gas 30 flowing per swirl unit 82, it is preferable for the cylindrical swirl units 82 to be arranged side by side in the hexagonally close-packed form. When the exhaust gas treatment apparatus 100 can tolerate an increase in pressure loss in the liquid removal unit 80, the plurality of swirl units 82 may not be arranged in the hexagonally close-packed form.

The plurality of swirl units 82 may be connected to each other by the connection member 81-1 in the inlet end 102. The plurality of swirl units 82 may be connected to each other by the connection member 81-2 in the outlet end 104. A periphery of the connection member 81 in the XY plane may be circular. The periphery of the connection member 81 may be connected to the side wall 15 (refer to Fig. 1) in the gas treatment unit 18 (refer to Fig. 1) of the reaction tower 10.

The connection member 81 is formed of a material that is durable against the exhaust gas 30, the liquid 40, and the drainage 46. The connection member 81 may be formed of the same material as the side wall 15 and the bottom surface 16 (refer to Fig. 1).

The liquid 40 sprayed in the form of a mist in the liquid spray unit 90 easily accompanies the exhaust gas 30 (refer to Fig. 1 to Fig. 3) traveling in the traveling direction E1. At least a part of the liquid 40 in the form of a mist may be removed in the liquid removal unit 80.

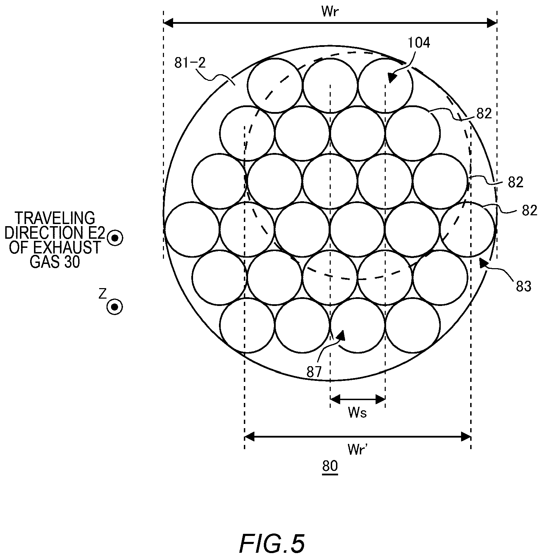

Fig. 5 is a diagram showing an example of a case where the liquid removal unit 80 shown in Fig. 4 is viewed from a traveling direction E2. As mentioned above, in the present example, the cylindrical swirl units 82 are arranged in the hexagonally close-packed form in the XY plane.

When viewed from the traveling direction E2, a width of the circular connection member 81 in the XY plane is set as a width Wr. The width Wr may be equal to a maximum value of a total value of a width of each of the plurality of swirl units 82 arranged side by side in the XY plane, or may be larger than the maximum value. The width Wr may be equal to the width Wg (refer to Fig. 1). In the liquid removal unit 80 of the present example, the plurality of swirl units 82 are arranged side by side in the XY plane, and thus it is easy to design the width Wr in accordance with the width Wg. For example, when the diameter of the gas treatment unit 18 is a width Wg' which is smaller than the width Wg, it is easy to design a width Wr' (<the width Wr) in accordance with the width Wg' by reducing the number of the swirl units 82. In Fig. 5, the case where the width of the connection member 81 in the XY plane is the width Wr' is shown by a coarse dashed line portion.

A width of an outer cylinder 83 in one swirl unit 82 is set as a width Ws. The width Ws may be a width of a cavity portion 87 through which the exhaust gas 30 passes. In the present example, the width Ws is a diameter of the cavity portion 87. The width Ws is smaller than the width Wr (refer to Fig. 5). When the width of the cavity portion 87 is not constant between the inlet end 102 and the outlet end 104 in the Z axis direction, the width Ws may be an average value of the widths of the cavity portion 87 between the inlet end 102 and the outlet end 104, may be a minimum value, may be a maximum value, or may be a median value.

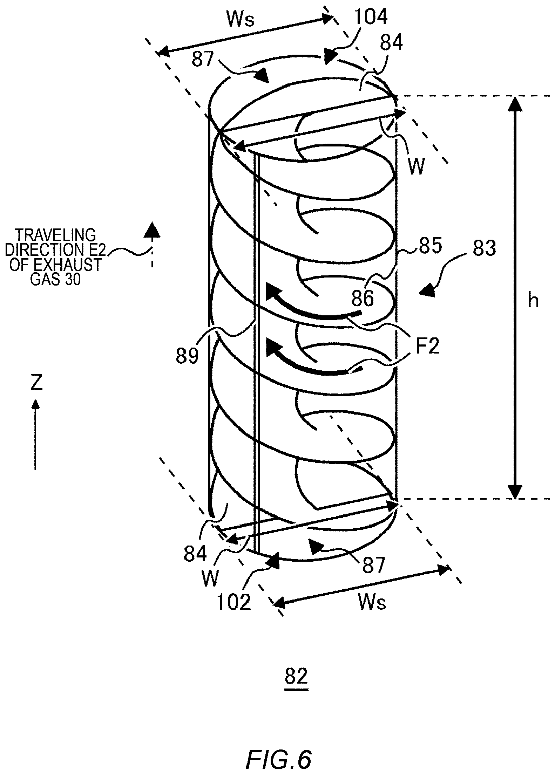

Fig. 6 is a perspective view showing an example of one swirl unit 82 shown in Fig. 1, Fig. 4, and Fig. 5. The swirl unit 82 has the outer cylinder 83, and a spiral plate 84 obtained by twisting a flat plate (described below). An outer side surface 85 is an outer side surface of the outer cylinder 83. An inner side surface 86 is an inner side surface of the outer cylinder 83. The cavity portion 87 is a space inside the outer cylinder 83. The cavity portion 87 may be a space surrounded by the inner side surface 86. The spiral plate 84 is provided in the cavity portion 87. The connection member 81 (refer to Fig. 1, Fig. 4, and Fig. 5) connects the side wall 15 of the reaction tower 10 and the outer cylinder 83.

The outer cylinder 83 and the spiral plate 84 are formed of a material that is durable against the exhaust gas 30, the liquid 40, and the drainage 46. The outer cylinder 83 and the spiral plate 84 may be formed of the same material as the side wall 15 and the bottom surface 16 (refer to Fig. 1).

The outer cylinder 83 of the present example is cylindrical and has a central axis in the Z axis direction. The outer cylinder 83 may be a member in a form of a plate obtained by circularly bending a rectangular plate, which has a height h and the width Ws, with the Z axis direction as the central axis. The outer cylinder 83 may include a slit 89 extending in a predetermined direction. In the present example, the slit 89 extends in a central axis direction (the Z axis direction) of the outer cylinder 83.

The expression that the slit 89 extends in the central axis direction of the outer cylinder 83 refers to a state in which one end of the slit 89 in an extension direction is arranged on an inlet end 102 side, and the other end of the slit 89 in the extension direction is arranged on an outlet end 104 side when viewed from the direction intersecting the traveling direction E2 (in the present example, in the case of the side view). That is, the expression that the slit 89 extends in the central axis direction of the outer cylinder 83 includes a case where the extension direction of the slit 89 is not parallel to the Z axis direction and spirally extends along the outer cylinder 83 in addition to a case of linearly extending parallel to the Z axis direction.

The slit 89 may extend from the inlet end 102 to the outlet end 104, or may not extend from the inlet end 102 to the outlet end 104. The outer cylinder 83 may include a plurality of slits 89. When the outer cylinder 83 includes the plurality of slits 89, one slit 89 may extend from the inlet end 102, or another slit 89 may extend to the outlet end 104. A height of the one slit 89 may be less than the height h, or a height of the other slit 89 may also be less than the height h.

The height of the outer cylinder is set as the height h. In the present example, the cavity portion 87 is a cylindrical space and has a central axis in the Z axis direction. The width Ws is a width of the cavity portion 87 in a direction (in the XY plane in the present example) intersecting an extension direction (the Z axis direction) of the outer cylinder 83. In the present example, the width Ws is the diameter of the cavity portion 87 in the XY plane. The height h may be 1.5 times or more and 5.0 times or less the width Ws.

The inlet end 102 is an end portion of the most upstream side of the exhaust gas 30 in the traveling direction E2 and is one end portion of the outer cylinder 83. The inlet end 102 is an end portion in the swirl unit 82 on an inlet side of the exhaust gas 30. The inlet end 102 may be a region which is planar and which includes the end portion of the most upstream side of the exhaust gas 30. The planar region may intersect the traveling direction E2. The exhaust gas 30 may pass through the planar region.

The outlet end 104 is an end portion of the most downstream side of the exhaust gas 30 in the traveling direction E2 and is the other end portion of the outer cylinder 83. The outlet end 104 is an end portion in the swirl unit 82 on an outlet side of the exhaust gas 30. The outlet end 104 may be a region which is planar and which includes the end portion of the most downstream side of the exhaust gas 30. The planar region may intersect the traveling direction E2. The exhaust gas 30 may pass through the planar region.

The spiral plate 84 may be in contact with the inner side surface 86 in the cavity portion 87. A width of a flat plate 88 (described below) is set as a width W. In the present example, the width W is a width of the flat plate 88 (described below) in a plane of the planar outlet end 104, and is a width of the flat plate 88 (described below) in a plane of the planar inlet end 102.

When traveling in the cavity portion 87 from the inlet end 102 to the outlet end 104, the exhaust gas 30 is swirled by the spiral plate 84. In Fig. 6, the swirling direction F2 of the exhaust gas 30 is indicated by a thick arrow.

As mentioned above, the liquid 40 sprayed in the form of a mist in the liquid spray unit 90 easily accompanies the exhaust gas 30 (refer to Fig. 1 to Fig. 3) traveling in the traveling direction E1. In the swirl unit 82 of the present example, the spiral plate 84 is provided in the cavity portion 87, and thus the exhaust gas 30 accompanied by the liquid 40 in the form of a mist is easily accelerated in the swirl unit 82. When the exhaust gas 30 is accelerated in the swirl unit 82, the liquid 40 in the form of a mist easily has a liquid film by coming into contact with the spiral plate 84. The liquid 40 that has the liquid film is easily separated from the exhaust gas 30, and thus it is difficult for the liquid 40 in the form of a mist to accompany the exhaust gas 30 that is led out from the outlet end 104. Therefore, it is difficult for the liquid 40 in the form of a mist to be discharged to the outside of the exhaust gas treatment apparatus 100.

The liquid 40 that has the liquid film in the cavity portion 87 may be discharged to the outside of the outer cylinder 83 after passing through the slit 89. The liquid 40 discharged to the outside of the outer cylinder 83 may drop inside the reaction tower 10. The liquid 40 may drop to the bottom surface 16 of the reaction tower 10. The liquid 40 that has dropped to the bottom surface 16 may be discharged through the drainage tube 20 after passing through the liquid discharge port 19.

In the exhaust gas treatment apparatus 100, in order to increase an amount of the treatment of the exhaust gas 30 per unit time, it is preferable for an area of the gas treatment unit 18 to be large when viewed from the traveling direction E1 (refer to Fig. 1 to Fig. 3). The exhaust gas 30 is easily accompanied by the liquid 40 in the form of a mist. In a case where the area of the gas treatment unit 18 is increased, when a speed of the exhaust gas 30 swirling in the swirling direction F1 is constant, the farther away from the location C1 at the center (refer to Fig. 3), the more easily it is for a centrifugal force, which is applied to the liquid 40 in the form of a mist, to be reduced. In addition, when the area of the gas treatment unit 18 is increased when viewed from the traveling direction E1, the number of the branch tube 13 and the ejection unit 14 is easily increased, and thus a resistance to the flow of the exhaust gas 30 by the branch tube 13 and the ejection unit 14 is easily increased. Therefore, the speed of the exhaust gas 30 is easily decreased. Therefore, when the width Ws of the one swirl unit 82 is equal to the width Wg (refer to Fig. 1), the farther away from the location C1 at the center (refer to Fig. 3), the more difficult it is for the liquid 40 in the form of a mist to be removed.

In the exhaust gas treatment apparatus 100 of the present example, the width Ws of the one swirl unit 82 is smaller than the width Wg (refer to Fig. 1). A swirling speed of the exhaust gas 30 that swirls in the one swirl unit 82 in the exhaust gas treatment apparatus 100 of the present example is set as a swirling speed V. When the width Ws is equal to the width Wg, the swirling speed of the exhaust gas 30 that swirls in the one swirl unit 82 is set as a swirling speed V'. In the exhaust gas treatment apparatus 100 of the present example, the width Ws is smaller than the width Wg, and thus it is easy for the swirling speed V to be larger than the swirling speed V'. Therefore, in the exhaust gas treatment apparatus 100 of the present example, also in at least any case of a case where the centrifugal force, which is applied to the liquid 40 in the form of a mist, is decreased, and a case where the speed of the exhaust gas 30 is decreased, at least a part of the liquid 40 in the form of a mist, accompanying the exhaust gas 30, is easily removed.

A mass of the liquid 40 in the form of a mist accompanying the exhaust gas 30, per unit volume before the exhaust gas 30 passes through the one swirl unit 82, is set as a mass M1. A mass of the liquid 40 in the form of a mist accompanying the exhaust gas 30, per unit volume after the exhaust gas 30 passes through the one swirl unit 82, is set as a mass M2. A removal rate R of the liquid 40 by the one swirl unit 82 is represented by 1-(M2/M1).

A ratio of the width Ws to the width Wg (refer to Fig. 1) may be determined based on the removal rate R. An absolute value of the width Ws may be determined based on the removal rate R. At least one of the ratio of the width Ws to the width Wg, or the absolute value of the width Ws may be determined based on a removal performance of the one swirl unit 82 to remove the liquid 40.

In the exhaust gas treatment apparatus 100, in order to increase a speed of the treatment of the exhaust gas 30 swirling in the swirling direction F1, it is preferable for an area of the gas treatment unit 18 to be small when viewed from the traveling direction E1 (refer to Fig. 1 to Fig. 3). However, when the area of the gas treatment unit 18 is reduced, the pressure loss of the exhaust gas 30 in the liquid removal unit 80 is easily increased. In the exhaust gas treatment apparatus 100 of the present example, the width Ws of the one swirl unit 82 is smaller than the width Wg (refer to Fig. 1). The larger the Stokes number St=pd²U/18ηL, the higher the removal performance of the liquid 40 by the one swirl unit 82 (p: a density of a droplet, d: a diameter of a droplet, U: a flow velocity, η: a viscosity coefficient of a flow, L: a characteristic length=a swirling radius). When the swirling speed V (the flow velocity U mentioned above) of the exhaust gas 30 is the same, the smaller the width Ws of the one swirl unit 82, the larger the Stokes number. Therefore, when the plurality of swirl units 82 having the width Ws and the one swirl unit 82 having the width Wg are compared, the removal performance of the liquid 40 is higher in the plurality of swirl units 82 having the width Ws. In order to realize, in the one swirl unit 82 having the width Wg, the same Stokes number as the plurality of swirl units 82 having the width Ws, the exhaust gas treatment apparatus 100 should tolerate an increase of the pressure loss by doubling the flow velocity U (Wg/Ws). Therefore, when the removal performance of the liquid 40 is the same in the plurality of swirl units 82 having the width Ws and the one swirl unit 82 having the width Wg, a total of the pressure losses of the exhaust gas 30 passing through the plurality of swirl units 82 having the width Ws is more easily suppressed than the pressure loss of the exhaust gas 30 passing through the one swirl unit 82 having the width Wg.

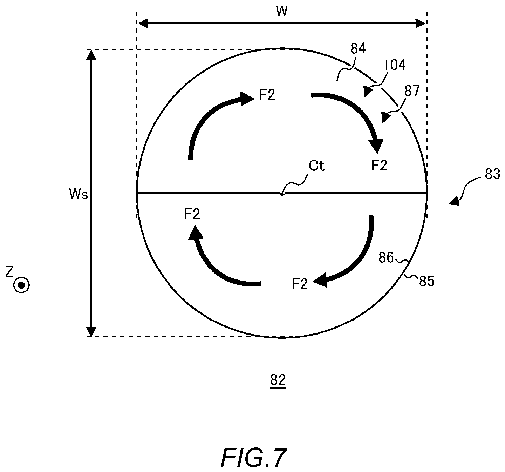

Fig. 7 is a diagram showing an example of a case where the one swirl unit 82 shown in Fig. 6 is viewed in a direction from an outlet end 104 to an inlet end 102. The outer cylinder 83 is circular when viewed in the direction from the outlet end 104 to the inlet end 102. A location Ct is a location of the center of the one swirl unit 82. In the present example, the location Ct is a location of the central axis in the cylindrical outer cylinder 83. It should be noted that the location Ct merely indicates the location of the center of the one swirl unit 82 and a physical central axis does not exist in the location Ct.

The swirl unit 82 has the spiral plate 84. Therefore, the exhaust gas 30 traveling in the traveling direction E2 through the cavity portion 87 spirally swirls in the swirling direction F2 along a surface of the spiral plate 84.

The width Ws may be 50 mm or more and 500 mm or less. The width Ws may be 100 mm or more and 350 mm or less, or may be 200 mm or more and 300 mm or less.

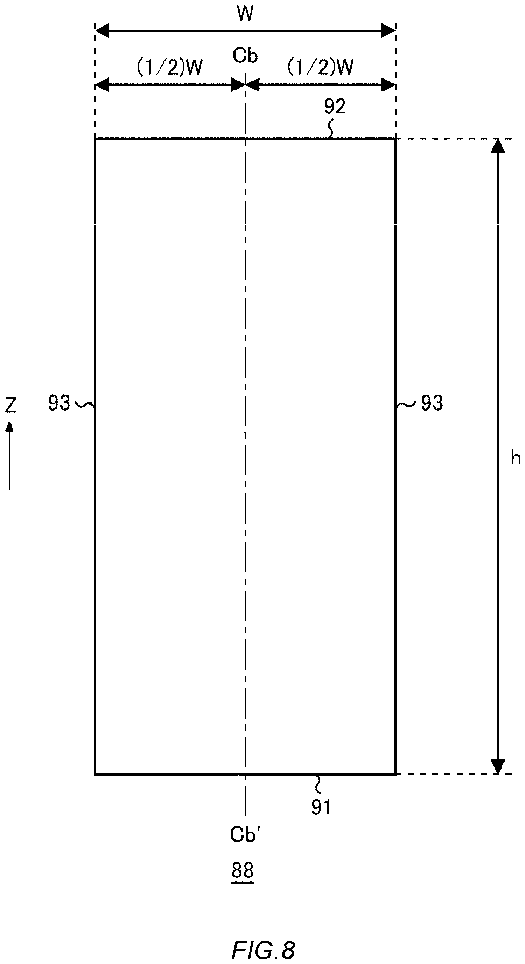

Fig. 8 is a diagram showing an example of a flat plate 88. The spiral plate 84 (refer to Fig. 6) is a plate obtained by twisting the flat plate 88. The flat plate 88 is a member in the form of a plate, which has a plane parallel to the Z axis direction. The flat plate 88 may be rectangular in the side view. One short side of the flat plate 88 is set as a side 91, and the other short side is set as a side 92. A long side of the flat plate 88 is set as a side 93. In the present example, the width W is a width of the side 91 and the side 92. In the present example, a length of the side 93 is equal to the height h.

In Fig. 8, a center line of the flat plate 88 in a direction parallel to the side 93 is set as a Cb-Cb' line. In the present example, the spiral plate 84 (refer to Fig. 6) is a plate obtained by twisting the flat plate 88 around the Cb-Cb' line in the XY plane in Fig. 8. A direction in which the flat plate 88 is twisted in the XY plane is the same as the swirling direction F2.

After the flat plate 88 is twisted, the spiral plate 84 may be accommodated in the cavity portion 87 (refer to Fig. 6) of the outer cylinder 83. The side 93 may be in contact with the inner side surface 86 of the cavity portion 87. The length of one side of the flat plate 88 (in the present example, the width W of the side 91 and the side 92) is equal to the width Ws (refer to Fig. 6). When the inlet end 102 (refer to Fig. 6) is a planar region, the side 91 may be arranged in the plane. When the outlet end 104 (refer to Fig. 6) is a planar region, the side 92 may be arranged in the plane. After the spiral plate 84 is accommodated in the cavity portion 87, the location of the Cb-Cb' line of the flat plate 88, and the location Ct (refer to Fig. 7) of the central axis in the cylindrical outer cylinder 83 may match with each other, when viewed in the direction from the outlet end 104 to the inlet end 102.

The side 93 may be in contact with the inner side surface 86 over the entire height h, or may be in contact with the inner side surface 86 in a part of the height h. That is, over the entire height h, the side 93 may be in airtight contact with the inner side surface 86, or may not be in the airtight contact. When a part of the side 93 and the inner side surface 86 are separated (not in the airtight contact with each other), the volumetric flow rate of the exhaust gas 30, per unit time, which passes through a space which separates the side 93 and the inner side surface 86, may be less than 1/100 of the volumetric flow rate of the exhaust gas 30, per unit time, which swirls in the swirling direction F2.

In the one swirl unit 82 of the present example, the spiral plate 84 obtained by twisting the flat plate 88 is accommodated in the cavity portion 87. The spiral plate 84 may not be welded to the inner side surface 86 of the cavity portion 87. That is, in a manufacturing process of the one swirl unit 82 in the present example, after a step of accommodating the spiral plate 84 in the cavity portion 87, a step such as welding for connecting the side 93 to the inner side surface 86 may not be performed. Therefore, it is easy to suppress a cost of manufacturing the one swirl unit 82. In addition, as mentioned above, in the liquid removal unit 80 of the exhaust gas treatment apparatus 100 in the present example, the plurality of swirl units 82 are arranged side by side in the XY plane, and thus it is easy to design the width Wr (refer to Fig. 5) in accordance with the width Wg (refer to Fig. 1). Therefore, it is easy to suppress a cost of manufacturing the exhaust gas treatment apparatus 100.

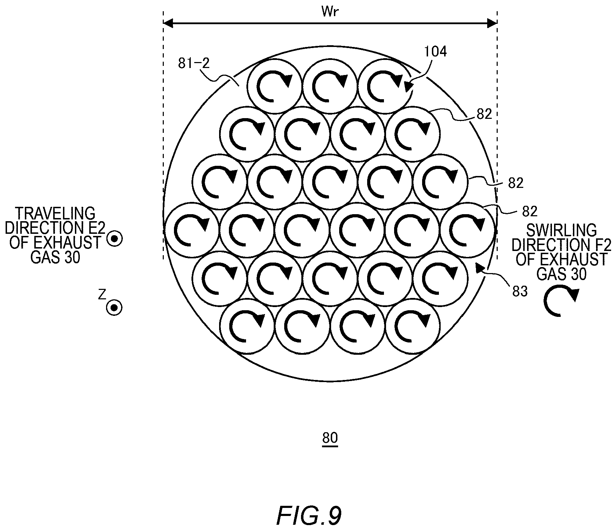

Fig. 9 is a diagram showing an example of the case where the liquid removal unit 80 shown in Fig. 4 is viewed from the traveling direction E2. In the present example, the swirling direction of the exhaust gas 30 that swirls in the one swirl unit 82, and the swirling direction of the exhaust gas 30 that swirls in another swirl unit 82 are the same. The one swirl unit 82 refers to any one swirl unit 82 among the plurality of swirl units 82. The other swirl unit 82 refers to the swirl unit 82 that is any one swirl unit 82 among the plurality of swirl units 82 and that is different from the one swirl unit 82. In the present example, the swirling direction of the exhaust gas 30 that swirls in each of the plurality of swirl units 82 is the swirling direction F2.

In the present example, the swirling direction F1 (refer to Fig. 3) of the exhaust gas 30 that swirls in the liquid spray unit 90, and the swirling direction F2 of the exhaust gas 30 that swirls in the swirl unit 82 are the same. In the present example, the swirling direction F1 and the swirling direction F2 are clockwise when viewed from the traveling direction E2. That is, in the present example, the swirling direction F1 and the swirling direction F2 are the same.

In the present example, the swirling direction of all the swirl units 82 is the swirling direction F2, and thus in the exhaust gas 30 after passing through the swirl unit 82, a component of the swirling speed in the swirling direction F2 weakens due to a confluence with that in the swirl unit 82 which is adjacent, and remains. The case of the swirling speed component remaining is a factor of increasing the pressure loss downstream from the exhaust gas treatment apparatus 100.

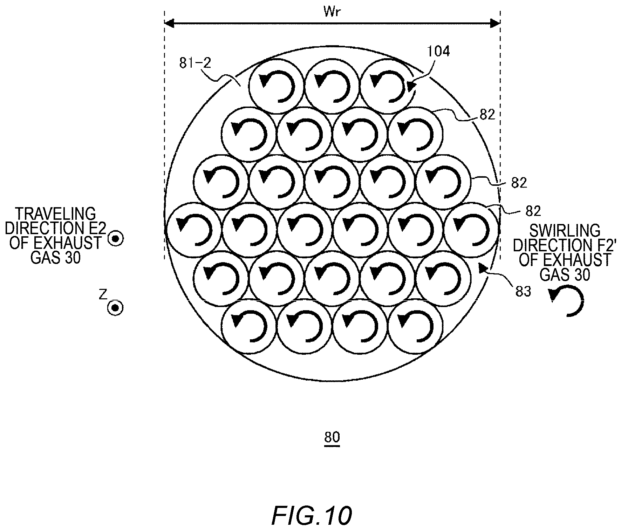

Fig. 10 is a diagram showing another example of the case where the liquid removal unit 80 shown in Fig. 4 is viewed from the traveling direction E2. In the present example as well, the swirling direction of the exhaust gas 30 that swirls in the one swirl unit 82, and the swirling direction of the exhaust gas 30 that swirls in the other swirl unit 82 are the same. In the present example, the swirling direction of the exhaust gas 30 that swirls in each of the plurality of swirl units 82 is the swirling direction F2'. The swirling direction F2' in Fig. 10, and the swirling direction F2 in Fig. 9 are different from each other. The swirling direction F2' in the present example, and the swirling direction F2 in Fig. 9 are opposite to each other.

In the present example, the swirling direction F1 (refer to Fig. 3) of the exhaust gas 30 that swirls in the liquid spray unit 90, and the swirling direction F2' of the exhaust gas 30 that swirls in the swirl unit 82 are different from each other. In the present example, the swirling direction F1 is clockwise when viewed from the traveling direction E2, and the swirling direction F2' is counterclockwise when viewed from the traveling direction E2. That is, in the present example, the swirling direction F1 and the swirling direction F2 are different from each other.

In the present example, the swirling direction of all the swirl units 82 is the swirling direction F2', and thus in the exhaust gas 30 after passing through the swirl unit 82, a component of the swirling speed in the swirling direction F2' weakens due to a confluence with that in the swirl unit 82 which is adjacent, and remains. The case of the swirling speed component remaining is a factor of increasing the pressure loss downstream from the exhaust gas treatment apparatus 100.

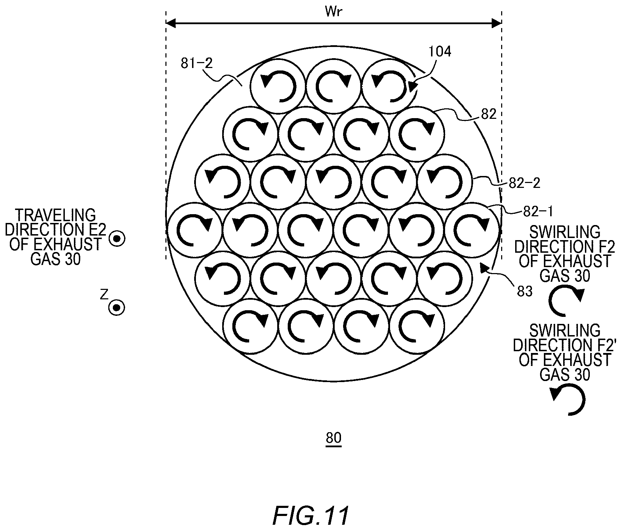

Fig. 11 is a diagram showing another example of the case where the liquid removal unit 80 shown in Fig. 4 is viewed from the traveling direction E2. In the present example, the swirling direction of the exhaust gas 30 that swirls in the one swirl unit 82, and the swirling direction of the exhaust gas 30 that swirls in the other swirl unit 82 are different from each other. The one swirl unit 82 is set as a swirl unit 82-1. The other swirl unit 82 is set as a swirl unit 82-2. In the present example, the swirling direction of the exhaust gas 30 that swirls in the swirl unit 82-1 is the swirling direction F2, and the swirling direction of the exhaust gas 30 that swirls in the swirl unit 82-2 is the swirling direction F2'. The exhaust gas treatment apparatus 100 may include one or a plurality of swirl units 82-1, or may include one or a plurality of swirl units 82-2.

The exhaust gas treatment apparatus 100 of the present example includes the plurality of swirl units 82-1 and the plurality of swirl units 82-2. Therefore, the exhaust gas treatment apparatus 100 of the present example can reduce the component of the swirling speed of the exhaust gas 30 after passing through the swirl units 82 more than a case of including only the plurality of swirl units 82-2. Therefore, the exhaust gas treatment apparatus 100 of the present example can easily suppress the pressure loss of the exhaust gas 30 which is generated downstream from the exhaust gas treatment apparatus 100.

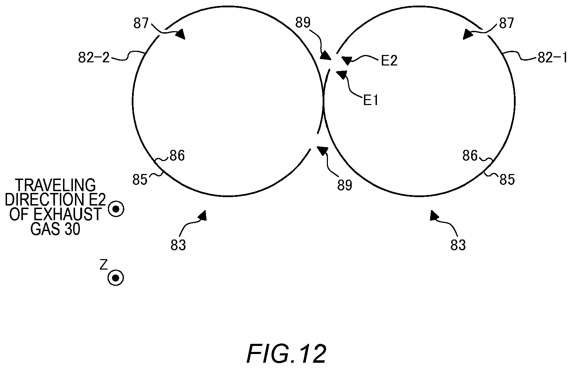

Fig. 12 is an enlarged view showing an example of two swirl units 82 that are arranged to be adjacent to each other in Fig. 5. In the present example, the one swirl unit 82 is set as the swirl unit 82-1, and the other swirl unit 82 is set as the swirl unit 82-2. The slit 89 in the outer cylinder 83 of the swirl unit 82-1, and the outer cylinder 83 of the swirl unit 82-2 may be separated from each other.

One end of the slit 89 of the swirl unit 82-1 is set as an end portion E1, and the other end is set as an end portion E2. The expression that the slit 89 of the swirl unit 82-1 and the outer cylinder 83 of the swirl unit 82-2 are separated refers to a state in which the end portion E1 is not in contact with the outer side surface 85 in the outer cylinder 83 of the swirl unit 82-1, and the end portion E2 is not in contact with the outer side surface 85. In the present example, the slit 89 in the outer cylinder 83 of the swirl unit 82-1, and the outer cylinder 83 of the swirl unit 82-2 are separated from each other, and thus the liquid 40, which has the liquid film in the cavity portion 87 of the swirl unit 82-1, is easily discharged to the outside of the swirl unit 82-1.

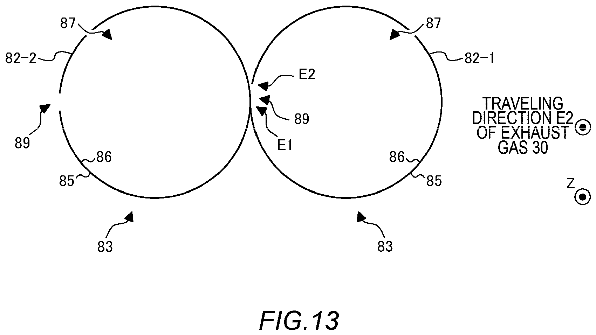

Fig. 13 is an enlarged view showing another example of the two swirl units 82 that are arranged to be adjacent to each other in Fig. 5. In the present example, the one swirl unit 82 is set as the swirl unit 82-1, and the other swirl unit 82 is set as the swirl unit 82-2. The slit 89 in the outer cylinder 83 of the swirl unit 82-1, and the outer cylinder 83 of the swirl unit 82-2 may face each other. The expression that the slit 89 of the swirl unit 82-1 and the outer cylinder 83 of the swirl unit 82-2 face each other may refer to a state in which one of the end portion E1 and the end portion E2 of the slit 89 is in contact with the outer cylinder 83 of the swirl unit 82-2, and the other is separated from the outer cylinder 83. In the present example, the end portion E1 of the slit 89 is in contact with the outer cylinder 83 of the swirl unit 82-2, and the end portion E2 is separated from the outer cylinder 83.

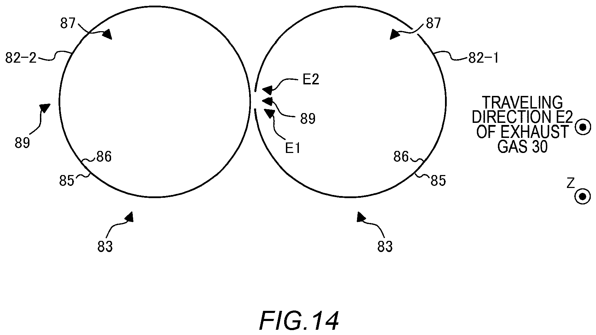

Fig. 14 is an enlarged view showing another example of the two swirl units 82 that are arranged to be adjacent to each other in Fig. 5. In the present example as well, the slit 89 of the swirl unit 82-1, and the outer cylinder 83 of the swirl unit 82-2 face each other. In the present example, the end portion E1 and the end portion E2 of the slit 89 are separated from the outer cylinder 83.

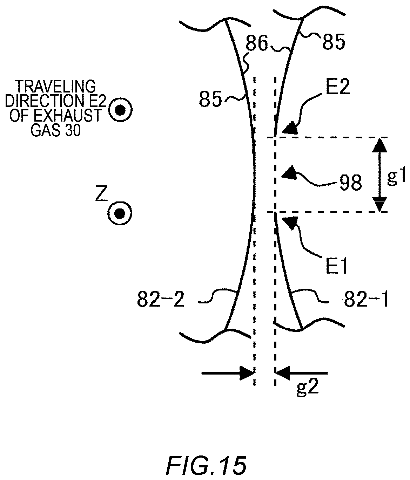

Fig. 15 is an enlarged view of a vicinity of a slit 89 in Fig. 14. A width between the end portion E1 and the end portion E2 in the swirl unit 82-1 is set as a width g1. A minimum value of a distance between the end portion E1 and the outer side surface 85 of the swirl unit 82-2 is set as a distance g2. The expression that the slit 89 of the swirl unit 82-1 and the outer cylinder 83 of the swirl unit 82-2 face each other may refer to a state in which the end portion E1 and the end portion E2 of the slit 89 are separated from the outer cylinder 83, and the distance g2 is 5.0% or more and 50.0% or less of the width g1. The expression that the slit 89 and the outer cylinder 83 face each other may refer to a state in which the end portion E1 and the end portion E2 of the slit 89 are separated from the outer cylinder 83, and the distance g2 is 5.0% or more and 50.0% or less of the width g1. The expression that the slit 89 and the outer cylinder 83 face each other may refer to a state in which the end portion E1 and the end portion E2 of the slit 89 are separated from the outer cylinder 83, and the distance g2 is 0.05 mm or more and 5.0 mm or less. The distance g1 may be 1.0 mm or more and 10.0 mm or less.

In the present example of Fig. 13 and Fig. 15, the slit 89 of the swirl unit 82-1, and the outer cylinder 83 of the swirl unit 82-2 face each other, and thus the liquid 40, which has the liquid film in the cavity portion 87 of the swirl unit 82-1, is easily discharged to the outside of the swirl unit 82-1 after passing through the slit 89 due to a capillary action.

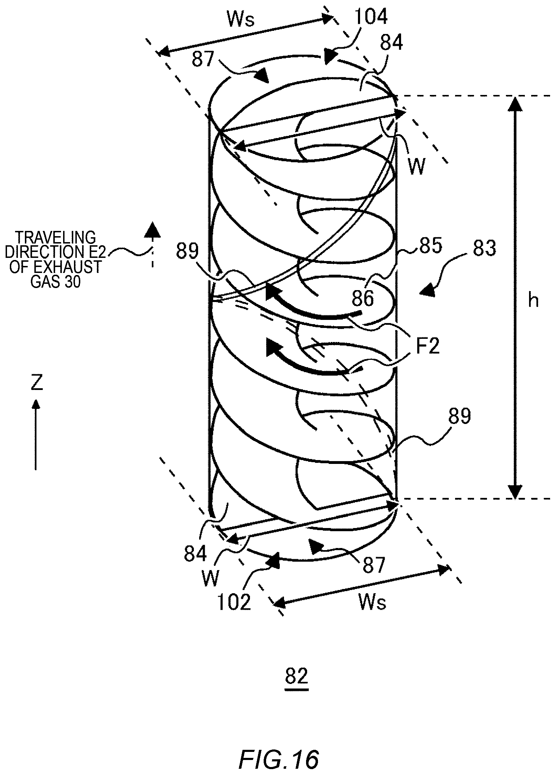

Fig. 16 is a perspective view showing another example of the one swirl unit 82 shown in Fig. 1, Fig. 4, and Fig. 5. In the swirl unit 82 of the present example, the slit 89 extends spirally. In this respect, the slit 89 of the swirl unit 82 of the present example is different from that shown in Fig. 6. The slit 89 may extend spirally from the inlet end 102 to the outlet end 104. The slit 89 may extend spirally in a direction opposite to the swirling direction F2 of the exhaust gas 30 that swirls in the swirl unit 82. The slit 89 may be arranged to go around the outer cylinder 83 from the inlet end 102 to the outlet end 104, and may be arranged to go around multiple times. When viewed from the traveling direction E2, a location of the slit 89 at the inlet end 102, and a location of the slit 89 at the outlet end 104 may match with each other, or may be different from each other.

By the slit 89 extending spirally in the direction opposite to the swirling direction F2, the exhaust gas 30 and the slit 89 easily intersect in the side view of the swirl unit 82. Therefore, an amount of the exhaust gas 30 that passes through the slit 89 and travels to the outside of the swirl unit 82 is reduced more easily than a case where the slit 89 extends spirally in the same direction as the swirling direction F2.

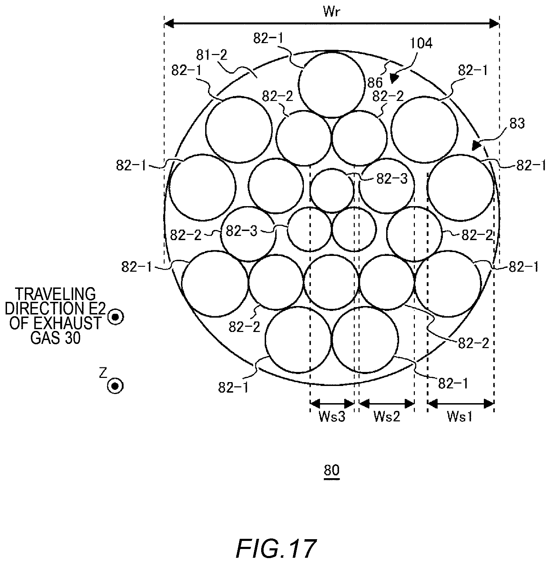

Fig. 17 is a diagram showing another example of the case where the liquid removal unit 80 shown in Fig. 4 is viewed from the traveling direction E2. In the present example, the swirl unit 82-1 is arranged to be closer to the side wall 15 (refer to Fig. 1 to Fig. 3) than the swirl unit 82-2 is. In the present example, the swirl unit 82-2 is arranged to be closer to the side wall 15 than a swirl unit 82-3 is. When a straight line which passes through the location Ct (refer to Fig. 7) at the center of the one swirl unit 82 and intersects the side wall 15, and a tangent of the side wall 15 at an intersection point of the straight line and the side wall 15, are orthogonal to each other in the XY plane, a distance between the one swirl unit 82 and the side wall 15 refers to a minimum distance among distances from the center Ct to the intersection.

A width of the outer cylinder 83 of the swirl unit 82-1 is set as a width Ws1. A width of the outer cylinder 83 of the swirl unit 82-2 is set as a width Ws2. A width of the outer cylinder 83 of the swirl unit 82-3 is set as a width Ws3. The width Ws1 to the width Ws3 may be a width of the cavity portion 87 of the outer cylinder 83 in the XY plane.

In the present example, the width Ws1 is larger than the width Ws2, and the width Ws2 is larger than the width Ws3. The exhaust gas 30 introduced into the reaction tower 10 swirls in the liquid spray unit 90 (refer to Fig. 1 to Fig. 3), and thus it is easier for the exhaust gas 30 to swirl to be closer to a side wall 15 side than to the center side in the gas treatment unit 18 (refer to Fig. 1 and Fig. 2). Therefore, in the liquid removal unit 80 (refer to Fig. 1), the exhaust gas 30 can pass through the side wall 15 side more easily than the center side in the gas treatment unit 18. Therefore, by the width Ws1 being larger than the width Ws2 and the width Ws2 being larger than the width Ws3, the pressure loss of the exhaust gas 30, which occurs by the exhaust gas 30 passing through the plurality of swirl units 82, is reduced more easily than a case where the width Ws1, the width Ws2, and the width Ws3 are equal to each other.

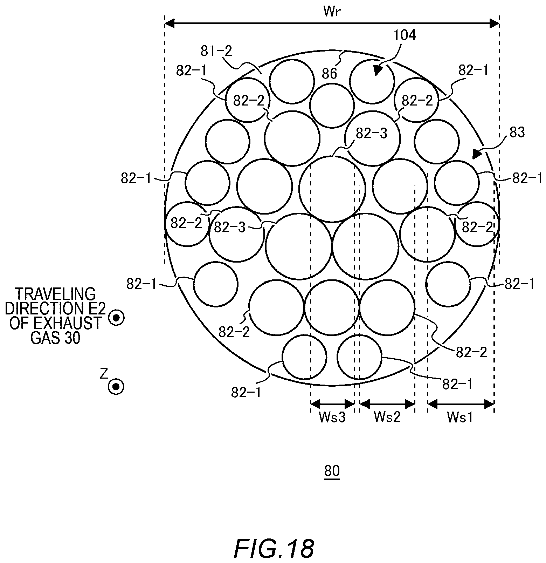

Fig. 18 is a diagram showing another example of the case where the liquid removal unit 80 shown in Fig. 4 is viewed from the traveling direction E2. In the present example, the swirl unit 82-1 is arranged to be closer to the side wall 15 (refer to Fig. 1 to Fig. 3) than the swirl unit 82-2 is. In the present example, the swirl unit 82-2 is arranged to be closer to the side wall 15 than the swirl unit 82-3 is.

The width of the outer cylinder 83 of the swirl unit 82-1 is set as a width Ws1'. The width of the outer cylinder 83 of the swirl unit 82-2 is set as a width Ws2'. The width of the outer cylinder 83 of the swirl unit 82-3 is set as a width Ws3'. The width Ws1' to the width Ws3' may be the width of the cavity portion 87 of the outer cylinder 83 in the XY plane.

In the present example, the width Ws1' is smaller than the width Ws2', and the width Ws2' is smaller than the width Ws3'. As mentioned above, in the liquid removal unit 80 (refer to Fig. 1), the exhaust gas 30 can pass through the side wall 15 side more easily than the center side in the gas treatment unit 18. The larger the swirling speed of the exhaust gas 30 in the swirl unit 82, the more easily the removal rate R of the liquid 40 in the form of a mist, which is removed in the swirl unit 82, is increased. The smaller the width Ws (refer to Fig. 6), the more easily the swirling speed of the exhaust gas 30 in the swirl unit 82 is increased. In the present example, the width Ws1' is smaller than the width Ws2', and the width Ws2' is smaller than the width Ws3', and thus the removal rate R of the liquid 40 in the plurality of swirl units 82 is increased more easily than a case where the width Ws1', the width Ws2', and the width Ws3' are equal to each other.

While the embodiments of the present invention have been described, the technical scope of the invention is not limited to the above-described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

10... reaction tower, 11 ... exhaust gas inlet port, 12 ... trunk tube, 13 ... branch tube, 14 ... ejection unit, 15 ... side wall, 16 ... bottom surface, 17 ...... exhaust gas outlet port, 18 ... gas treatment unit, 19 ... liquid discharge port, 20 ... drainage tube, 30 ... exhaust gas, 32 ... exhaust gas inlet tube, 40 ... liquid, 46 ... drainage, 50 ... power apparatus, 60 ... pump, 70 ... volumetric flow rate control unit, 72 ... valve, 80 ... liquid removal unit, 81 ... connection member, 82.... swirl unit, 83 ... outer cylinder, 84 ... spiral plate, 85 ... outer side surface, 86 ... inner side surface, 87 ... cavity portion, 88 ... flat plate, 89.... slit, 90 ... liquid spray unit, 91 ... side, 92 ... side, 93 ... side, 100 ... exhaust gas treatment apparatus, 102 ... inlet end, 104 ... outlet end

## Claims

1. An exhaust gas treatment apparatus comprising:
a reaction tower that has an exhaust gas inlet port into which exhaust gas is introduced and an exhaust gas outlet port from which the exhaust gas is discharged and that is supplied with a liquid for treating the exhaust gas; and
one or a plurality of swirl units that are provided inside the reaction tower and are provided between the exhaust gas inlet port and the exhaust gas outlet port and that are configured to cause the exhaust gas to be swirled, wherein
each of the swirl units has an outer cylinder, and a spiral plate that is provided in a cavity portion inside the outer cylinder, the spiral plate being obtained by twisting a flat plate, and
a length of one side of the flat plate is equal to a width of the cavity portion in a direction intersecting an extension direction of the outer cylinder.

2. The exhaust gas treatment apparatus according to claim 1, wherein
the reaction tower further has a liquid spray unit provided between the exhaust gas inlet port and the exhaust gas outlet port,
in the liquid spray unit, the liquid is sprayed into the inside of the reaction tower,
the exhaust gas swirls in the liquid spray unit in a predetermined swirling direction, and travels inside the reaction tower in a direction from the exhaust gas inlet port to the exhaust gas outlet port, and
the swirling direction of the exhaust gas that swirls in the liquid spray unit, and a swirling direction of the exhaust gas that swirls in each of the swirl units are the same.

3. The exhaust gas treatment apparatus according to claim 1, wherein
the reaction tower further has a liquid spray unit provided between the exhaust gas inlet port and the exhaust gas outlet port,
in the liquid spray unit, the liquid is sprayed into the inside of the reaction tower,
the exhaust gas swirls in the liquid spray unit in a predetermined swirling direction, and travels inside the reaction tower in a direction from the exhaust gas inlet port to the exhaust gas outlet port, and
the swirling direction of the exhaust gas that swirls in the liquid spray unit, and a swirling direction of the exhaust gas that swirls in each of the swirl units are different from each other.

4. The exhaust gas treatment apparatus according to any one of claims 1 to 3, wherein
the plurality of swirl units are arranged side by side in a direction intersecting the direction from the exhaust gas inlet port to the exhaust gas outlet port,
the outer cylinder includes a slit extending in a predetermined direction, and
the slit in the outer cylinder of one of the swirl units, and the outer cylinder of another one of the swirl units face each other.

5. The exhaust gas treatment apparatus according to claim 4, wherein
the slit extends in a central axis direction of the outer cylinder.

6. The exhaust gas treatment apparatus according to claim 4 or 5, wherein
the slit extends spirally in a direction opposite to the swirling direction of the exhaust gas that swirls in each of the swirl units.

7. The exhaust gas treatment apparatus according to any one of claims 4 to 6, wherein
a swirling direction of the exhaust gas that swirls in the one of the swirl units, and a swirling direction of the exhaust gas that swirls in the other one of the swirl units are the same.

8. The exhaust gas treatment apparatus according to any one of claims 4 to 6, wherein
a swirling direction of the exhaust gas that swirls in the one of the swirl units, and a swirling direction of the exhaust gas that swirls in the other one of the swirl units are different from each other.

9. The exhaust gas treatment apparatus according to any one of claims 4 to 8, wherein
the one of the swirl units is arranged to be closer to an inner side surface of the reaction tower than the other one of the swirl units is, and a width in the outer cylinder of the one of the swirl units is larger than a width of the outer cylinder of the other one of the swirl units.

10. The exhaust gas treatment apparatus according to any one of claims 4 to 8, wherein
the one of the swirl units is arranged to be closer to an inner side surface of the reaction tower than the other one of the swirl units is, and a width in the outer cylinder of the one of the swirl units is smaller than a width of the outer cylinder of the other one of the swirl units.

11. The exhaust gas treatment apparatus according to any one of claims 1 to 10, wherein
the reaction tower further has a connection member that is provided inside the reaction tower and that is configured to connect an inner side surface of the reaction tower and the outer cylinder of each of the swirl units.
